**Europäisches Patentamt**

(19) **European Patent Office**

**Office européen des brevets**

(11) Publication number : **0 264 964 B1**

(12) # EUROPEAN PATENT SPECIFICATION

(45) Date of publication of patent specification :
21.12.94 Bulletin 94/51

(51) Int. Cl.⁵ : **H04N 5/275**

(21) Application number : **87115624.6**

(22) Date of filing : **23.10.87**

(54) **Method and apparatus for processing a video signal.**

(30) Priority : **24.10.86 US 922633**

(43) Date of publication of application :
**27.04.88 Bulletin 88/17**

(45) Publication of the grant of the patent :
**21.12.94 Bulletin 94/51**

(84) Designated Contracting States :
**DE FR GB**

(56) References cited :
EP-A- 0 065 423
EP-A- 0 160 549
EP-A- 0 195 501
GB-A- 2 168 564

(73) Proprietor : **The Grass Valley Group, Inc.**
**P.O.Box 1114**
**13024 Bitney Springs Road**
**Grass Valley California 95945 (US)**

(72) Inventor : **Jackson, Richard A.**
**10959 Genasci Road**
**Nevada City California 95959 (US)**

(74) Representative : **Baillie, Iain Cameron et al**
**c/o Ladas & Parry**
**Altheimer Eck 2**
**D-80331 München (DE)**

## Description

This invention relates to a method and apparatus for processing a video signal.

Background of the Invention

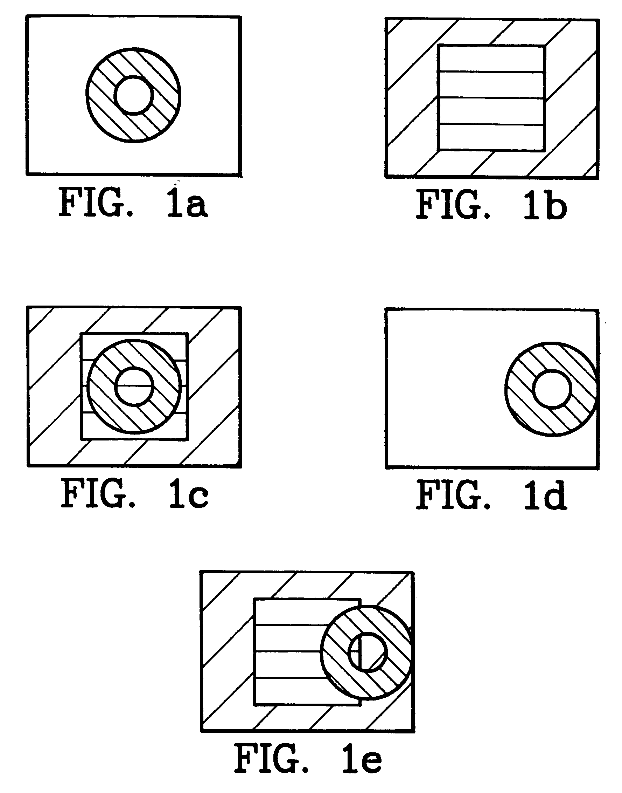

A television picture is a representation in substantially planar form of a scene that is composed by the producer of a television program. The scene may be composed of tangible objects, or it may be at least partially synthesized by artificial means, e.g. a television graphics system, so that the source of the video signal representing the scene is not a camera or a film scanner but a frame buffer and a computer used for adjusting the contents of the frame buffer. Generally the scene is made up of two component scenes, namely a foreground scene and a background scene, that are combined using a travelling matte technique. For example, the foreground scene might contain an annulus against a solid color matter and the background scene a square against a screen of contrasting color, as shown in FIGS. 1(a) and 1(b) respectively, so that when the foreground and background scenes are combined the resulting picture has the appearance shown in FIG. 1(c).

A transform system operates on the video signal representing a scene, and may be used to carry out a spatial transformation on the scene. For example, the scene may be displaced to the right. If the foreground video signal representing the FIG. 1(a) scene is applied to a transform system which carriers out a transformation on the signal such that the transformed signal represents the scene shown in FIG. 1(d), in which the annulus of the FIG. 1(a) scene has been shifted to the right, then the signal obtained by combining the transformed foreground signal with the background signal might represent the picture shown in FIG. 1(e).

GB-A-2,117,996 discloses a spatial transformation system having means for transforming a first video signal and associated key signal into a transformed video signal and associated key signal to produce an output video signal and associated key signal.

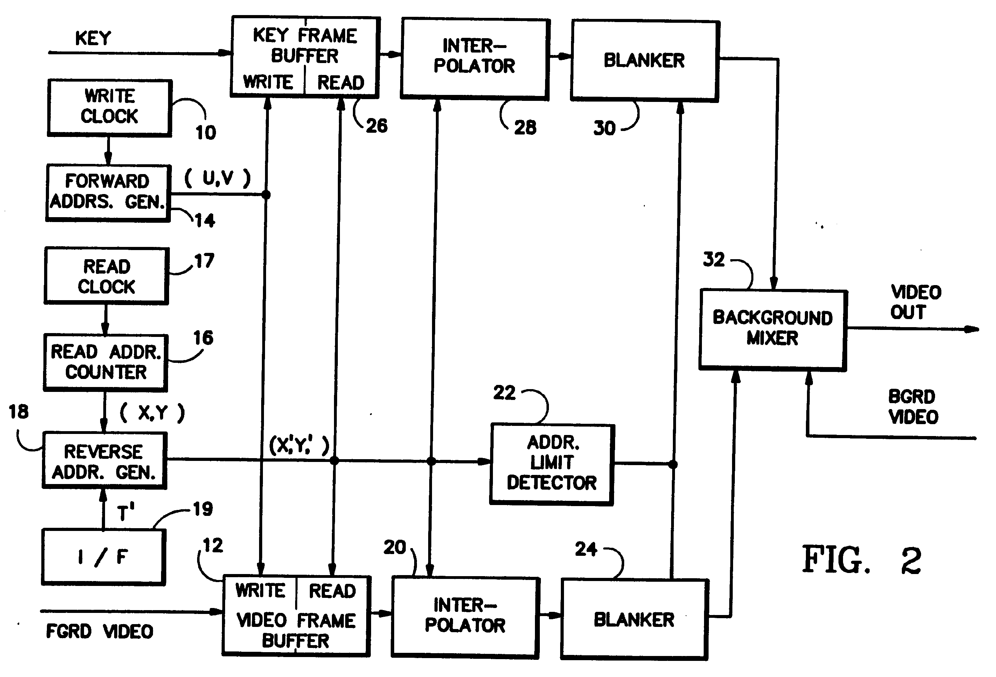

Most transform systems are of two main kinds, known as the forward transform system and the reverse transform system. FIG. 2 represents a frame-based reverse transform system based on principles that are known at present. It is believed that the FIG. 2 system does not exist in the prior art, and it is being described in order to provide information that will be useful in understanding the invention.

The transform system shown in FIG. 2 operates by digitizing the input video signal under control of a write clock 10 and writing the resulting sequence of digital words into a frame buffer 12 using addresses generated by a forward address generator 14. The input video signal is derived from an analog composite video signal in conventional interlaced format by separating it into its components (normally luminance and chrominance) and digitizing each component. The frame buffer 12 therefore has a memory for storing the luminance component and a memory for storing the chrominance components. However, since the components are acted on in like manner in the transform system, it is not necessary to consider the components separately. The operation of digitizing the video signal effectively resolves each raster line of the picture into multiple pixels, e.g., 720 pixels, that are small, but finite, in area. The location of a pixel in the scene can be defined by a two-coordinate display address (U, V) of the input screen (FIG. (1a), e.g.). The address space of the video frame buffer is organized so that there is one-to-one correspondence between the display addresses and the memory addresses generated by the forward address generator 14. Thus, the digital word representing the pixel having the display address (U, V) is written into the frame buffer 12 at a location that has a memory address that can be expressed as (U, V).

In order to read an output video signal from the frame buffer 12, an read address counter 16 operates under control of a read clock 17 to generate a sequence of addresses (X, Y) defining the locations in the output screen (FIG. 1(d)) of the pixels that will be successively addressed. The coordinate values X and Y each have the same number of significant digits as the coordinate values U and V respectively. Accordingly, the display addresses (X, Y) define the same possible pixel positions in the output display space as are defined in the input display space by the display addresses (U, V). However, the display addresses (X, Y) are not used directly to read the output video signal from the frame buffer. A reverse address generator 18 receives the output scene display addresses (X, Y) and multiplies them by a transform matrix T′ to generate corresponding memory addresses (X′, Y′) which are used to read the video signal from the frame buffer. The transform matrix T′ is applied to the reverse address generator 18 by a user interface 19, and defines the nature of the transform that is effected by the reverse transform system. If, for example, it is desired to effect a transformation in which the input scene is displaced diagonally upwards and to the left by an amount equal to the inter-pixel pitch in the diagonal direction, the transform matrix would be such that the memory address (X′, Y′) that is generated in response to the display address (X, Y) would be (X+1, Y+1), assuming that the origin of the coordinate system is in the upper left corner of the input and output scene, and values of X and Y increase to the right and downwards respectively.

In the general case, it is not sufficient for the values of X′ and Y′ to be related to X and Y by addition or subtraction of integers, and therefore the memory address coordinates X′ and Y′ have more significant digits than the display address coordinates X and Y. The reverse addresses are applied not only to the frame buffer 12 but also to a video interpolator 20. For each reverse address (X′, Y′), the frame buffer outputs the respective digital words representing an array of pixels surrounding the point defined by the reverse address (X′, Y′). For example, the data words representing the four pixels nearest the point defined by the address (X′, Y′) might be provided. These four data words are applied to the interpolator 20, and the interpolator combines these four digital words into a single digital output word based on the fractional portion of the address (X′, Y′). For example, using decimal notation, if the least significant digit of each coordinate X and Y is unity but the least significant digit of the coordinates X′ and Y′ is one-tenth, and the counter 16 generates the read address (23, 6) which is converted to a reverse address (56.3, 19.8) by being multiplied by the transform matrix T′, the frame buffer 12 responds to the reverse address (56.3, 19.8) by providing the digital words stored at the addresses (56, 19), (56, 20), (57, 19) and (57, 20) and the interpolator 20 combines them into a single digital output word by weighting them 3:7 in the horizontal direction and 8:2 in the vertical direction. This digital word defines the value that is to be generated at the location of the output screen that is defined by the display address (23, 6).

The range of possible reverse addresses is greater than the range of memory addresses defining locations in the frame buffer 12, so that a validly-generated reverse address might define a location that does not exist in the frame buffer's address space. Therefore, the reverse addresses are also applied to an address limit detector 22 which responds to an invalid reverse address (an address which defines a location outside the address space of the frame buffer 12) by providing a signal which causes a video blanker 24 to inhibit the output signal of the frame buffer.

In parallel with the video channel comprising the video frame buffer 12, the video interpolator 20 and the video blanker 24 is a key channel comprising a key frame buffer 26, a key interpolator 28 and a key blanker 30. A key signal that is applied to the key channel provides opacity information about the foreground video signal applied to the video channel. This opacity information defines where and the extent to which a background scene represented by a background video signal can be seen in a composite picture (FIG. 1(c)) formed by mixing the foreground and background video signals under the influence of the key signal. Outside the boundaries of the foreground objects, the foreground scene is transparent (key=0) and the background scene is seen without modification by the foreground scene. If a foreground object is fully opaque (key=1), the background scene is fully obscured by the foreground object, but if a foreground object is only partially transparent (0 < key < 1) the background video signal is mixed with the foreground video signal in proportion to the value of the key. Because the foreground scene is transformed by the video channel, it is necessary to transform the key in the identical manner in order to maintain congruence between the foreground scene and the key. Therefore, the key signal is processed in the key channel in the same way as the foreground signal is processed in the video channel. Thus, the key signal undergoes the same spatial transformation and interpolation as the foreground signal, and is subject to the same address limit blanking.

The transform matrix T′ must be mathematical inverse of the desired spatial transform T, and therefore this known transform system is called a reverse transform system.

It will be understood that even though a television picture is strictly two dimensional (X and Y), a third dimension (Z) must be accommodated if effects simulating movement towards or away from the viewpoint are to be provided. Accordingly, a reverse transform generator must normally have available to it, and carry out computations using, signals representing pixel positions in three dimensions.

Summary of the Invention

According to a first aspect of the present invention there is provided a video effects system having means for transforming a first video signal and associated key signal into a transformed video signal and associated key signal to produce an output video signal and associated key signal characterised by:
        means for generating a first depth signal associated with the first video signal;
        means for deriving a perspective signal from the first depth signal; and
        means for combining the transformed video signal and associated key signal with a second video and key signal as a function of the perspective signal to produce the output video signal and associated key signal.

According to a second aspect of the present invention there is provided a method for processing a video signal comprising the steps of transforming a first video signal and associated key signal into a transformed video signal and associated key signal to produce an output video signal and associated key signal characterised by the step of generating a first depth signal associated with the first video signal;
        deriving a perspective signal from the first depth signal; and
        combining the transformed video signal and associated key signal with a second video and key signal as a function of the perspective signal to produce the output video signal and associated key signal.

## Brief Description of the Drawings

For a better understanding of the invention, and to show how the same may be carried into effect, reference will now be made, by way of example, to the accompanying drawings in which:

FIG. 1 is a series of screens illustrating transformation of a foreground scene,

FIG. 2 is a block diagram of a reverse transform system, and

FIG. 3 is a block diagram of a reverse transform system that embodies the present invention.

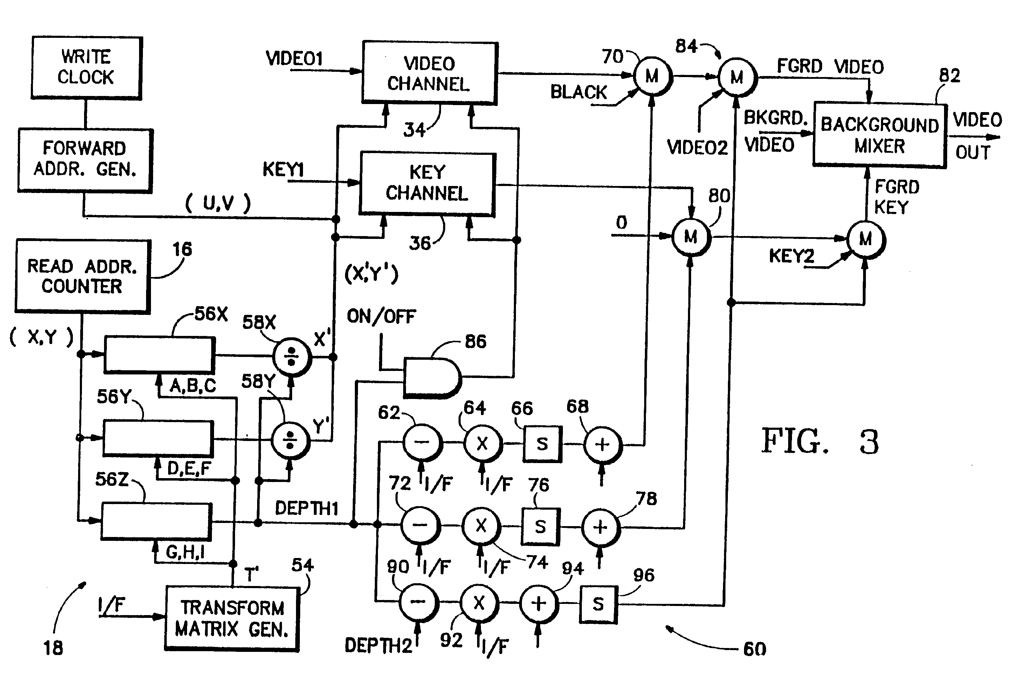

In FIGS. 2 and 3, like reference numerals designate corresponding components.

## Detailed Description

The special effects system shown in FIG. 3 is based on a reverse transform system. Some elements of the reverse transform system have been omitted from FIG. 3 for the sake of clarity. In particular, the video channel and the key channel are shown as respective blocks 34 and 36, and the address limit detector is not shown in FIG. 3.

In spatial transformation of a two-dimensional scene, the pixel at a location having a display address (X, Y) in the output screen is derived from a pixel at a location having a display address (X′, Y′) in the input screen such that

$$X' = \frac{AX + BY + C}{GX + HY + I} \qquad Y' = \frac{DX + EY + F}{GX + HY + I}$$

where the coefficients A-I are field-constant values that define the spatial transformation.

The reverse address generator is shown in greater detail in FIG. 3 than in FIG. 2. The reverse address generator comprises a transform matrix generator 54 which generates the coefficients A - I that compose the reverse transform matrix T′. These coefficients are generated in response to signals received from an operator interface (I/F) indicating the nature of the transformation to be executed. The three groups of coefficients A,B,C; D,E,F and G,H,I are applied to respective processing circuits 56X, 56Y and 56Z. The processing circuits 56 each receive the address signal (X, Y) from the read address counter 16 and provide as their respective output signals the values AX + BY + C, DX + EY + F and GX + HY + I. The output signals of the circuits 56X and 56Y are applied as numerator inputs to respective division circuits 58X and 58Y, each of which receives the output signal of the circuit 56Z as its denominator input. The output signals of the circuits 58X and 58Y therefore represent X′ and Y′ respectively and are applied to the video and key channels. In general, the coefficients A-F are used for flat transforms (X/Y scaling, X/Y translation or Z-axis rotation), and the coefficients G-I are functions of the perspective viewpoint and the Z-location of the pixel having the display address (X′, Y′). If there is no perspective (the viewpoint is infinitely distant from the scene) or if no X- or Y-axis rotation or Z-axis translation is called for, G and H are each zero and I is one and the denominator of each equation is one. Conversely, a non-unity denominator causes the values of X′ and Y′ to vary on a pixel-by-pixel (G not equal to zero), line-by-line (H not equal to zero) and/or field-constant (I not equal to one) basis. If the denominator is less than unity, the pixel that was at the location (X, Y) (and has been transformed to the location (X′, Y′)) appears to have moved away from the viewer, whereas if the denominator is greater than unity the pixel appears to have moved towards the viewer. Therefore, the denominator of the spatial transformation equations provides a measure of the apparent distance of a pixel from the viewer. Accordingly, the signal provided by the processing circuit 56Z and having the value GX + HY + I is representative of the apparent depth of each pixel of the scene represented by the transformed video signal. The depth signal is applied to a perspective processor 60 that receives the transformed video and key signals from the video and key channels. The perspective processor has four distinct processing channels for the depth signal, namely a perspective dim channel, a perspective fade channel, a perspective clip channel and an intersecting planes channel.

In the perspective dim channel, the depth signal is first applied to a subtraction circuit 62 in which it is subtracted from a signal defining a datum value for the apparent depth. The datum value represents the apparent depth of a reference or start plane. If the apparent depth indicated by the depth signal is less than the datum value, this implies that the pixel is closer to the viewpoint than is the start plane, and the output signal of the subtraction circuit 62 is forced to zero and the depth signal has no effect on the output of the perspective dim channel. If the apparent depth indicated by the depth signal is greater than the datum value, the output signal of the subtraction circuit represents the depth of the pixel relative to the start plane.

The output signal of the subtraction circuit 62 is applied to a multiplier 64, in which the signal representative of relative depth is multiplied by a gain factor. The value of the gain factor can range from zero to very large (typically 1024). If the gain factor is less than one, the sensitivity of the following stages to the relative depth value is decreased, whereas if the gain factor is greater than one, the sensitivity is increased. The output of the multiplier 64 is applied to a clipper and shaper 66, in which the output signal of the multiplier is limited to a maximum value of 1.0 and shaped so that the output signal of the clipper and shaper 66 has no slope discontinuities. This is done in order to ensure that the transition from no dimming (relative depth less than zero) to dimming (relative depth greater than zero) does not generate Mach bands. In a summation circuit 68, an offset value, which controls a static dim, is added to the output signal of the clipper and shaper, and the sum is again clipped to 1.0. The resulting control signal is used to drive the control port of a video mixer 70 which receives the output signal of the video channel and black video at its signal ports respectively. The mixer 70 is set up so that the output signal from the video channel is passed without change for a control value of zero, black video is passed for a control value of one, and a proportional mix is performed between the output signal of the video channel and black video for control values between zero and one. The output of the key channel is not affected by the control signal provided by the perspective dim channel. The effect of perspective dim is that an increasing amount of black is mixed with the output signal of the video channel as the control value increases. Thus, as the apparent depth of the scene represented by the output signal of the video channel increases, temporally (frame-by-frame) and/or spatially (line-by-line or pixel-by-pixel), the scene become darker.

By subtracting the depth signal from the signal defining the datum value, the perspective dim effect is limited to pixels that are at a depth that is greater than that of the start plane. The static dim offset establishes a minimum value for the depth control signal provided by the perspective dim channel: even pixels that are at a depth that is less than that of the start plane are subject to the static dim. The gain factor applied to the multiplexer 64 determines how rapidly the scene dims as it recedes from the viewer.

The perspective fade circuit is similar to the perspective dim circuit, except that the control signal is applied to a key mixer 80 instead of to the video mixer 70. The output signal of the key blanker of the key channel 36 is passed without change to the background mixer 82 for a control value of zero, a zero key signal is passed to the mixer for a control value of one, and a proportional mix is performed between the output of the key blanker and a zero key for control values between zero and one. Therefore, the key signal provided at the output of the key mixer 80 varies in dependence on the key depth control signal from a minimum value of zero to a maximum value that is equal to the value of the output signal of the key channel. The output signals of the video and key mixers 70 and 80 are applied to the background mixer 82 through a video combiner 84. The combiner 84 is of the same general type as that described and claimed in EP-A-0 236 943, published 16.09.87, and its operation will be described below. However, for present purposes it is assumed that the combiner has no effect on the output signals of the mixers 70 and 80. When the output signals of the video and key mixers are applied to the background mixer as foreground and video key signals, and the output signal of the key mixer changes in response to change in the key depth control signal, the opacity of the foreground scene in the picture represented by the full-field output signal of the mixer 82 changes: as the key value is forced towards zero from one, the opacity of the foreground scene decreases, with the result that the background mixer mixes in more background video and makes the foreground scene appear to fade into the background as it recedes from the viewer. The datum value, the static fade offset and the gain factor that are applied to the depth signal in the circuits 72, 78 and 74 respectively have analogous effects to the corresponding values applied to the depth signal in the perspective dim channel.

The perspective dim effect and the perspective fade effect may be invoked simultaneously. A single perspective dim/perspective fade channel may be used to generate a depth control signal that is applied selectively to the control port of the mixer 70 and/or to the control port of the mixer 80.

A television picture is seen in two dimensions as a projection of a scene onto a projection plane. The projection occurs relative to the viewpoint. When the scene is spatially transformed such that pixels move in the Z-direction, whether due to Z-axis translation or X- or Y-axis rotation, there is a possibility that pixels will be transformed to locations that are behind the viewpoint. When that occurs, an inverted replica of portions of the transformed scene is created in the projection plane. Since the viewer should not normally be able to see in the projection plane portions of the scene that lie on the other side of the viewer from the projection plane, it is desirable that these wrap-around portions of the scene be blanked. It can be shown that wrap-around occurs when the denominator of the transform equations is negative. Therefore, the sign bit of the depth signal generated by the processing circuit 56Z is applied to one input of an AND gate 86 which receives an on/off signal from the operator interface at its other input. The output of the AND gate 86 is applied to the blankers of the video and key channels. When the on/off signal is asserted, the sign bit of the depth signal is applied to the blankers and inhibits the video and key signals in the event that the sign bit indicates that the depth signal has a negative value. When the on/off signal is not asserted, the wrap-around portions of the scene are not suppressed in accordance with the value of the sign bit.

In the above-mentioned co-pending application, it is explained how the priority of two video signals can be adjusted, causing one picture to overlay another, in dependence upon the value of a priority signal. The priority signal effectively weights the two key signals in complementary fashion so that by adjusting the value of the priority signal the effective relative value of the key signals can be changed.

As shown in FIG. 3, the output signal (DEPTH 1) of the processing circuit 56Z is applied to a subtraction circuit 90 which receives at its other input a signal (DEPTH 2) representing the depth of a second video signal VIDEO 2 which has an associated key signal KEY 2. The DEPTH 2 signal may be generated by a reverse address generator similar to that shown at 18 in FIG. 3, or it may be generated using actual depth information. The resulting relative depth signal is applied to a multiplier 92, in which the relative depth value is multiplied by a gain factor, which may range from zero to a very large value (e.g. 1024), and the output of the multiplier is applied to a subtraction circuit 94 in which it is offset by 0.5 and clipped to a range of 0.0 to 1.0. The offset and clipped signal is then applied to a shaper 96 in which it is shaped so that the resulting relative depth control signal has no slope discontinuities at zero or one. The relative depth control signal is applied to both the video mixer and the key mixer of the combiner 84, which is illustrated in simplified form in FIG. 3. The combiner 84 is set up so that VIDEO 1 is passed for a relative depth control valve of zero, VIDEO 2 is passed for a relative depth control value of one, and a proportional mix is performed between the two video values for values between zero and one. The 0.5 offset provided by the subtraction circuit 94 ensures that equal apparent depths (which would result in a relative depth value of zero) will cause an equal mix of VIDEO 1 and VIDEO 2.

The video signal that is applied to the video channel 34 is an unshaped video signal, i.e. it has not been multiplied by an associated key signal. Preferably, the foreground video signal that is applied to the background mixer 82 is a shaped video signal. Shaping may be accomplished in a shadow processor, such as that disclosed in US-A-4,689,681, incorporated between the video channel 34 and the background mixer 82.

It will be appreciated that the present invention is not restricted to the particular embodiment that has been described and illustrated, and that variations may be made therein without departing from the scope of the invention as defined in the appended claims and equivalents thereof. For example, it is not essential to the invention that the depth control signal be generated by the reverse address generator of a reverse transform system and, as indicated in connection with the discussion of the inputs to the subtraction circuit 90, a signal representative of depth may be derived independently of the reverse transform generator, e.g. by a separate address generator. Use of data explicitly representing depth, instead of implicitly as in the case of the output of the reverse transform generator, has the advantage that it provides a more reliable indication of actual depth. Of course, the invention is not restricted to use in connection with a reverse transform system.

**Claims**

1. A video effects system having means (16, 18) for transforming a first video signal (VIDEO1) and associated key signal (KEY1) into a transformed video signal and associated key signal to produce an output video signal (FGRD VIDEO) and associated key signal (FGRD KEY) characterised by:
   means (18) for generating a first depth signal (DEPTH1) associated with the first video signal;
   means (60) for deriving a perspective signal from the first depth signal; and
   means (70, 80, 84) for combining the transformed video signal and associated key signal with a second video and key signal as a function of the perspective signal to produce the output video signal and associated key signal.

2. The system as recited in claim 1 wherein the deriving means comprises means (86) for generating a clip perspective signal from the depth signal as the perspective signal to blank the transformed video and associated key signals when the depth signal indicates that the scene represented by the transformed video signal is obscured by the projection plane upon which the transformed video signal is viewed to produce the output video and associated key signal.

3. The system as recited in claim 1 wherein the deriving means comprises means (62-86) for generating a dim perspective signal from the depth signal as the perspective signal, the dim perspective signal being used in the combining means (70) to mix as the second video signal a black video signal with the transformed video signal to produce the output video signal.

4. The system as recited in claim 1 wherein the deriving means comprises means (72-78) for generating a fade perspective signal from the depth signal as the perspective signal, the fade perspective signal being used in the combining means (80) to mix as the second key signal a zero key signal with the transformed associated key signal to produce the output associated key signal.

5. The system as recited in claim 1 wherein the deriving means comprises means (90-96) for generating a priority perspective signal from the depth signal as the perspective signal, the priority perspective signal being used in the combining means (84) to mix as the second video and second key signal a second input video signal and associated key signal with the transformed video and associated key signals to produce the output

6. The system as recited in claim 1 wherein the combining means comprises:

means (70) for combining the transformed video signal with a black video signal (BLACK) as the second video signal as a function of the perspective signal to produce a dimming effect in the transformed video signal;

means (80) for combining the transformed associated key signal with a zero key signal (0) as the second key signal as a function of the perspective signal to produce a fading effect in the transformed video signal; and

means (84) for combining the transformed video and associated key signals with a second input video signal (VIDEO2) and associated key signal (KEY2) as the second video and key signals as a function of the perspective signal to produce an intersection effect in the transformed video signal.

7. The system as recited in claim 1 wherein the deriving means comprises:

means (86) for generating a clip perspective signal from the depth signal as the perspective signal, the clip perspective signal being used to blank the transformed video and associated key signals when the depth signal indicates a position behind a projection plane for the transformed video and associated key signals;

means (62-68) for generating a dim perspective signal from the depth signal as the perspective signal, the dim perspective signal being used by the combining means to produce a dimming effect for the transformed video signal in the output video signal;

means (72-78) for generating a fade perspective signal from the depth signal as the perspective signal, the fade perspective signal being used by the combining means to produce a fading effect for the transformed video signal in the output video signal; and

means (90-96) for generating a priority perspective signal from the depth signal as the perspective signal, the priority perspective signal being used by the combining means to produce an intersecting planes effect for the transformed video signal in the output video signal.

8. The system as recited in claim 7 wherein the combining means comprises:

means (70) for combining the transformed video signal with a black video signal as the second signal as a function of the dim perspective signal to produce the dimming effect;

means (80) for combining the transformed associated key signal with a zero key signal as the second key signal as a function of the fade perspective signal to produce the fading effect; and

means (84) for combining the transformed video and associated key signals with a second input video and associated key signal as the second video and key signals as a function of the priority perspective signal to produce the intersecting planes effect.

9. A method for processing a video signal comprising the steps of transforming (16, 18) a first video signal (VIDEO1) and associated key signal (KEY1) into a transformed video signal and associated key signal to produce an output video signal (FGRD VIDEO) and associated key signal (FGRD KEY) characterised by the step of generating a first depth signal (DEPTH1) associated with the first video signal;

deriving (60) a perspective signal from the first depth signal; and

combining (70, 80, 84) the transformed video signal and associated key signal with a second video and key signal as a function of the perspective signal to produce the output video signal and associated key signal.

10. The method according to claim 9 wherein the deriving step comprises generating (86) a clip perspective signal from the depth signal as the perspective signal to blank the transformed video and associated key signals when the depth signal indicates that the scene represented by the transformed video signal is obscured by the projection plane upon which the transformed video signal is viewed to produce the output video and associated key signal.

11. The method according to claim 9 wherein the deriving step comprises generating (62-68) a dim perspective signal from the depth signal as the perspective signal, the dim perspective signal being used in the combining step (70) to mix as the second video signal a black video signal with the transformed video signal to produce the output video signal.

12. The method according to claim 9 wherein the deriving step comprises generating (72-78) a fade perspective signal from the depth signal as the perspective signal, the fade perspective signal being used in the combining step (80) to mix as the second key signal a zero key signal with the transformed associated key signal to produce the output associated key signal.

13. The method according to claim 9 wherein the deriving step comprises generating (90-96) a priority perspective signal from the depth signal as the perspective signal, the priority perspective signal being used in the combining step (84) to mix as the second video and second key signal a second input video signal and associated key signal with the transformed video and associated key signals to produce the output video and associated key signal.

14. The method according to claim 9 wherein the combining step comprises:

combining (70) the transformed video signal with a black video signal (BLACK) as the second video signal as a function of the perspective signal to produce a dimming effect in the transformed video signal;

combining (80) the transformed associated key signal with a zero key signal (0) as the second key signal as a function of the perspective signal to produce a fading effect in the transformed video signal; and

combining (84) the transformed video and associated key signals with a second input video signal (VIDEO2) and associated key signal (KEY2) as the second video and key signals as a function of the perspective signal to produce an intersection effect in the transformed video signal.

15. The method according to claim 9 wherein the step comprises:

generating (86) a clip perspective signal from toe depth signal as the perspective signal, the clip perspective signal being used to blank the transformed video and associated key signals when the depth signal indicates a position behind a projection plane for the transformed video and associated key signals;

generating (62-68) a dim perspective signal from the depth signal as the perspective signal, the dim perspective signal being used in the combining step (70) to produce a dimming effect for the transformed video signal in the output video signal;

generating (70-76) a fade perspective signal from the depth signal as the perspective signal, the fade perspective signal being used in the combining step (80) to produce a fading effect for the transformed video signal in the output video signal; and

generating (90-96) a priority perspective signal from the depth signal as the perspective signal, the priority perspective signal being used in the combining step (84) to produce an intersecting planes effect for the transformed video signal in the output video signal.

16. The method as recited in claim 15 wherein the step combining means comprises:

combining (70) the transformed video signal with a black video signal as the second signal as a function of the dim perspective signal to produce the dimming effect;

combining (80) the transformed associated key signal with a zero key signal as the second key signal as a function of the fade perspective signal to produce the fading effect; and

combining (84) the transformed video and associated key signals with a second input video and associated key signal as the second video and key signals as a function of the priority perspective signal to produce the intersecting planes effect.

**Patentansprüche**

1. Videoeffektesystem mit einer Einrichtung zur Transformation eines ersten Videosignals (VIDEO 1) und eines zugeordneten Key-Signals (KEY1) in ein transformiertes Videosignal mit zugeordnetem Key-Signal, so daß ein Augangs-Videosignal (FGRD VIDEO) und ein zugeordnetes Key-Signal (FGRD KEY) erzeugt werden, gekennzeichnet durch:

eine Einrichtung (18) zur Erzeugung eines ersten Tiefensignals (DEPTH 1), das dem ersten Videosignal zugeordnet ist;

eine Einrichtung (60) zur Ableitung eines Perspektivensignals aus dem ersten Tiefensignal; und

eine Einrichtung (70, 80, 84) zur Kombination des transformierten Videosignals und zugeordneten Key-Signals mit einem zweiten Video- und Key-Signal, und zwar als eine Funktion des Perspektivensignals, so daß ein Ausgangsvideosignal mit zugeordnetem Key-Signal erzeugt wird.

2. System nach Anspruch 1, wobei die Ableitungseinrichtung eine Einrichtung (86) zur Erzeugung eines Clip-Perspektivensignals als Perspektivensignal aus dem Tiefensignal umfaßt, um das transformierte Video- und das zugeordnete Key-Signal auszutasten, wenn das Tiefensignal anzeigt, daß das durch das transformierte Videosignal dargestellte Bild durch die Projektionsebene verdeckt ist, auf der das transformierte Videosignal betrachtet wird, so daß das Ausgangsvideosignal und das zugeordnete Key-Signal erzeugt werden.

3. System nach Anspruch 1, wobei die Ableitungseinrichtung eine Einrichtung (62-86) zur Erzeugung eines Dim-Perspektivensignals als Perspektivensignal aus dem Tiefensignal umfaßt, wobei das Dim-Perspektivensignal in der Kombinationseinrichtung (70) dazu verwendet wird, ein schwarzes Videosignal als zweites Videosignal mit dem transformierten Videosignal zu mischen, um das Ausgangsvideosignal zu erzeugen.

4. System nach Anspruch 1, wobei die Ableitungseinrichtung eine Einrichtung (72-78) zur Erzeugung eines Fade-Perspektivensignals als Perspektivensignal aus dem Tiefensignal umfaßt, wobei das Fade-Perspektivensignal in der Kombinationseinrichtung (80) dazu verwendet wird, ein Null-Key-Signal als zweites Key-Signal mit dem transformierten zugeordneten Key-Signal zu mischen, um das zugeordnete Ausgangs-Key-Signal zu erzeugen.

5. System nach Anspruch 1, wobei die Ableitungseinrichtung eine Einrichtung (90-96) zur Erzeugung eines Prioritäts-Perspektivensignals als Perspektivensignal aus dem Tiefensignal umfaßt, wobei das Prioritäts-Perspektivensignal in der Kombinationseinrichtung (84) dazu verwendet wird, ein zweites Eingangsvideosignal und zugeordnetes Key-Signal als zweites Video- und zweites Key-Signal mit dem transformierten Video- und dem zugeordneten Key-Signal zu mischen, um das Ausgangsvideo- und das zugeordnete Key-Signal zu erzeugen.

6. System nach Anspruch 1, wobei die Kombinationseinrichtung folgendes umfaßt:
eine Einrichtung (70) zur Kombination des transformierten Videosignals mit einem schwarzen Videosignal (BLACK) als zweites Videosignal als eine Funktion des Perspektivensignals, so daß in dem transformierten Videosignal ein Dim-Effekt erzeugt wird;
eine Einrichtung (80) zur Kombination des transformierten zugeordneten Key-Signals mit einem Null-Key-Signal (0) als zweites Key-Signal als eine Funktion des Perspektivensignals, so daß in dem transformierten Videosignal ein Fade-Effekt erzeugt wird; und
eine Einrichtung (84) zur Kombination des transformierten Video- und des zugeordneten Key-Signals mit einem zweiten Eingangsvideosignal (VIDEO2) und einem zugeordneten Key-Signal (KEY2) als zweite Video- und Key-Signale als eine Funktion des Perspektivensignals, so daß in dem transformierten Videosignal ein Schnitteffekt erzeugt wird.

7. System nach Anspruch 1, wobei die Ableitungseinrichtung folgendes umfaßt:
eine Einrichtung (86) zur Erzeugung eines Clip-Perspektivensignals als Perspektivensignal aus dem Tiefensignal, wobei das Clip-Perspektivensignal dazu verwendet wird, das transformierte Video- und das zugeordnete Key-Signal auszutasten, wenn das Tiefensignal eine Position hinter einer Projektionsebene für das transformierte Videosignal und das zugeordnete Key-Signal anzeigt;
eine Einrichtung (62-86) zur Erzeugung eines Dim-Perspektivensignals als Perspektivensignal aus dem Tiefensignal, wobei das Dim-Perspektivensignal von der Kombinationseinrichtung (70) dazu verwendet wird, für das transformierte Videosignal in dem Ausgangsvideosignal einen Dim-Effekt zu erzeugen;
eine Einrichtung (72-78) zur Erzeugung eines Fade-Perspektivensignals als Perspektivensignal aus dem Tiefensignal, wobei das Fade-Perspektivensignal von der Kombinationseinrichtung dazu verwendet wird, für das transformierte Videosignal in dem Ausgangsvideosignal einen Fade-Effekt zu erzeugen; und
eine Einrichtung (90-96) zur Erzeugung eines Prioritäts-Perspektivensignals als Perspektivensignal aus dem Tiefensignal, wobei das Prioritäts-Perspektivensignal von der Kombinationseinrichtung dazu verwendet wird, für das transformierte Videosignal in dem Ausgangsvideosignal einen Schnittebenen-Effekt zu erzeugen.

8. System nach Anspruch 7, wobei die Kombinationseinrichtung folgendes umfaßt:
eine Einrichtung (70) zur Kombination des transformierten Videosignals mit einem schwarzen Videosignal als zweites Videosignal als eine Funktion des Dim-Perspektivensignals, so daß der Dim-Effekt erzeugt wird;
eine Einrichtung (80) zur Kombination des transformierten zugeordneten Key-Signals mit einem Null-Key-Signal als zweites Key-Signal als eine Funktion des Fade-Perspektivensignals, so daß der Fade-Effekt erzeugt wird; und
eine Einrichtung (84) zur Kombination des transformierten Video- und des zugeordneten Key-Signals mit einem zweiten Eingangsvideosignal und einem zugeordneten Key-Signal als zweite Video- und Key-Signale als eine Funktion des Prioritäts-Perspektivensignals, so daß der Schnittebenen-Effekt erzeugt wird.

9. Verfahren zur Verarbeitung eines Videosignals, umfassend die Schritte der Transformation (16, 18) eines ersten Videosignals (VIDEO 1) und eines zugeordneten Key-Signals (KEY1) in ein transformiertes Videosignal mit zugeordnetem Key-Signal, so daß ein Augangs-Videosignal (FGRD VIDEO) und ein zugeordnetes Key-Signal (FGRD KEY) erzeugt werden, gekennzeichnet durch den Schritt der Erzeugung eines ersten Tiefensignals (DEPTH 1), das dem ersten Videosignal zugeordnet ist;

den Schritt der Ableitung (60) eines Per-spektivsignals von dem ersten Tiefensignal; und

den Schritt der Kombination (70, 80, 84) des transformierten Videosignals und zugeordneten Key-Signals mit einem zweiten Video- und Key-Signal, und zwar als eine Funktion des Per-spektivsignals, so daß ein Ausgangsvideosi-gnal mit zugeordnetem Key-Signal erzeugt wird.

10. Verfahren nach Anspruch 9, wobei der Ableitungsschritt die Erzeugung (86) eines Clip-Perspektivsignals als Perspektivsignal aus dem Tiefensignal umfaßt, um das transformierte Video- und das zugeordnete Key-Signal auszutasten, wenn das Tiefensignal anzeigt, daß das durch das transformierte Videosignal dargestellte Bild durch die Projektionsebene verdeckt ist, auf der das transformierte Videosignal betrachtet wird, so daß das Ausgangsvideosignal und das zugeordnete Key-Signal erzeugt werden.

11. Verfahren nach Anspruch 9, wobei der Ableitungsschritt die Erzeugung (62-86) eines Dim-Perspektivsignals als Perspektivsignal aus dem Tiefensignal umfaßt, wobei das Dim-Per-spektivsignal in dem Kombinationsschritt (70) dazu verwendet wird, ein schwarzes Videosignal als zweites Videosignal mit dem transformierten Videosignal zu mischen, um das Ausgangsvideosignal zu erzeugen.

12. Verfahren nach Anspruch 9, wobei der Ableitungsschritt die Erzeugung (72-78) eines Fade-Perspektivsignals als Perspektivsignal aus dem Tiefensignal umfaßt, wobei das Fade-Per-spektivsignal in dem Kombinationsschritt (80) dazu verwendet wird, ein Null-Key-Signal als zweites Key-Signal mit dem transformierten zugeordneten Key-Signal zu mischen, um das zugeordnete Ausgangs-Key-Signal zu erzeugen.

13. Verfahren nach Anspruch 9, wobei der Ableitungsschritt die Erzeugung (90-96) eines Prioritäts-Perspektivsignals als Perspektiven-signal aus dem Tiefensignal umfaßt, wobei das Prioritäts-Perspektivsignal in dem Kombinati-onsschritt (84) dazu verwendet wird, ein zweites Eingangsvideosignal und zugeordnetes Key-Signal als zweites Video- und zweites Key-Signal mit dem transformierten Video- und dem zugeordneten Key-Signal zu mischen, um das Ausgangsvideo- und das zugeordnete Key-Signal zu erzeugen.

14. Verfahren nach Anspruch 9, wobei der Kombinationsschritt folgendes umfaßt:

die Kombination (70) des transformierten Videosignals mit einem schwarzen Videosignal (BLACK) als zweites Videosignal als eine Funkti-on des Perspektivsignals, so daß in dem transformierten Videosignal ein Dim-Effekt erzeugt wird;

die Kombination (80) des transformierten zugeordneten Key-Signals mit einem Null-Key-Signal (0) als zweites Key-Signal als eine Funk-tion des Perspektivsignals, so daß in dem transformierten Videosignal ein Fade-Effekt erzeugt wird; und

die Kombination (84) des transformierten Video- und des zugeordneten Key-Signals mit einem zweiten Eingangsvideosignal (VIDEO2) und einem zugeordneten Key-Signal (KEY2) als zweite Video- und Key-Signale als eine Funktion des Perspektivsignals, so daß in dem transformierten Videosignal ein Schnitteffekt erzeugt wird.

15. Verfahren nach Anspruch 9, wobei der Schritt folgendes umfaßt:

Erzeugung (86) eines Clip-Perspektivsignals als Perspektivsignal aus dem Tiefensignal, wobei das Clip-Perspektivsignal dazu verwendet wird, das transformierte Video- und das zugeordnete Key-Signal auszutasten, wenn das Tiefensignal eine Position hinter einer Projektionsebene für das transformierte Videosignal und das zugeordnete Key-Signal anzeigt;

Erzeugung (62-86) eines Dim-Perspekti-vensignals als Perspektivsignal aus dem Tie-fensignal, wobei das Dim-Perspektivsignal in dem Kombinationsschritt (70) dazu verwendet wird, für das transformierte Videosignal in dem Ausgangsvideosignal einen Dim-Effekt zu erzeugen;

Erzeugung (72-78) eines Fade-Perspekti-vensignals als Perspektivsignal aus dem Tie-fensignal, wobei das Fade-Perspektivsignal in dem Kombinationsschritt (80) dazu verwendet wird, für das transformierte Videosignal in dem Ausgangsvideosignal einen Fade-Effekt zu erzeugen; und

Erzeugung (90-96) eines Prioritäts-Perspektivsignals als Perspektivsignal aus dem Tiefensignal, wobei das Prioritäts-Perspektivsignal in dem Kombinationsschritt (84) dazu verwendet wird, für das transformierte Videosignal in dem Ausgangsvideosignal einen Schnittebenen-Effekt zu erzeugen.

16. Verfahren nach Anspruch 15, wobei der Kombinationsschritt folgendes umfaßt:

Kombination (70) des transformierten Videosignals mit einem schwarzen Videosignal als zweites Videosignal als eine Funktion des Dim-Perspektivensignals, so daß der Dim-Effekt erzeugt wird;

Kombination (80) des transformierten zugeordneten Key-Signals mit einem Null-Key-Signal als zweites Key-Signal als eine Funktion des Fade-Perspektivsignals, so daß der Fade-Effekt erzeugt wird; und

Kombination (84) des transformierten Video- und des zugeordneten Key-Signals mit einem zweiten Eingangsvideosignal und einem zugeordneten Key-Signal als zweite Video- und Key-Signale als eine Funktion des Prioritäts-Perspektivsignals, so daß der Schnittebenen-Effekt erzeugt wird.

**Revendications**

1. Système d'effets vidéo comprenant des moyens (16,18) pour transformer un premier signal vidéo (VIDEO1) et un signal de clé associé (KEY1) en un signal vidéo transformé et un signal de clé associé, afin de produire un signal vidéo de sortie (FGRD VIDEO) et un signal de clé associé (FGRD KEY),
caractérisé par:

des moyens (10) pour engendrer un premier signal de profondeur (DEPTH1) associé au premier signal vidéo ;

des moyens (60) pour dériver un signal de perspective à partir du premier signal de profondeur ; et

des moyens (70,80,84) pour combiner le signal vidéo transformé et le signal de clé associé avec un deuxième signal vidéo et un deuxième signal de clé, en fonction du signal de perspective, pour produire le signal vidéo de sortie et le signal de clé associé.

2. Système suivant la revendication 1,dans lequel les moyens de dérivation comprennent des moyens (86) de génération d'un signal de perspective de coupure à partir du signal de profondeur, comme signal de perspective, pour supprimer le signal vidéo transformé et le signal de clé associé lorsque le signal de profondeur indique que la scène représentée par le signal vidéo transformé est occultée par le plan de projection sur lequel le signal vidéo transformé est vu, afin de produire le signal vidéo de sortie et le signal de clé associé .

3. Système suivant la revendication 1, dans lequel les moyens de dérivation comprennent des moyens (62-86) de génération d'un signal de perspective d'assombrissement à partir du signal de profondeur, comme signal de perspective, le signal de perspective d'assombrissement étant utilisé dans les moyens de combinaison (70) pour mélanger, comme deuxième signal vidéo, un signal vidéo noir avec le signal vidéo transformé, afin de produire le signal vidéo de sortie.

4. Système suivant la revendication 1, dans lequel les moyens de dérivation comprennent des moyens (72-78) de génération d'un signal de perspective de fondu à partir du signal de profondeur, comme signal de perspective, le signal de perspective de fondu étant utilisé dans les moyens de combinaison (80) pour mélanger, comme deuxième signal de clé, un signal de clé zéro avec le signal de clé associé transformé, afin de produire le signal de clé associé de sortie.

5. Système suivant la revendication 1, dans lequel les moyens de dérivation comprennent des moyens (90-96) de génération d'un signal de perspective de priorité à partir du signal de profondeur, comme signal de perspective, le signal de perspective de priorité étant utilisé dans les moyens de combinaison (84) pour mélanger, comme deuxième signal vidéo et deuxième signal de clé, un deuxième signal vidéo d'entrée et un deuxième signal de clé associé avec le signal vidéo transformé et le signal de clé associé, afin de produire le signal vidéo de sortie et le signal de clé associé.

6. Système suivant la revendication 1, dans lequel les moyens de combinaison comprennent :

des moyens (70) de combinaison du signal vidéo transformé avec un signal vidéo noir (BLACK) comme deuxième signal vidéo,en fonction du signal de perspective, afin de produire un effet d'assombrissement dans le signal vidéo transformé ;

des moyens (80) de combinaison du signal de clé associé transformé avec un signal de clé zéro (0) comme deuxième signal de clé, en fonction du signal de perspective, afin de produire un effet de fondu dans le signal vidéo transformé ; et

des moyens (84) de combinaison du signal vidéo transformé et du signal de clé associé avec un deuxième signal vidéo d'entrée (VIDEO2) et un deuxième signal de clé associé (KEY2) comme deuxième signal vidéo et deuxième signal de clé, en fonction du signal de perspective, afin de produire un effet d'intersection dans le signal vidéo transformé.

7. Système suivant la revendication 1, dans lequel les moyens de dérivation comprennent :

des moyens (86) de génération d'un signal de perspective de coupure à partir du signal de profondeur, comme signal de perspective, le signal de perspective de coupure étant utilisé pour supprimer le signal vidéo transformé et le signal de clé associé lorsque le signal de profondeur indique une position derrière un plan de projection pour le signal vidéo transformé et le signal de clé associé ;

des moyens (62-68) de génération d'un signal de perspective d'assombrissement à partir du signal de profondeur, comme signal de perspective, le signal de perspective d'assombrissement étant utilisé par les moyens de combinaison, afin de produire un effet d'assombrissement pour le signal vidéo transformé dans le signal vidéo de sortie ;

des moyens (72-78) de génération d'un signal de perspective de fondu à partir du signal de profondeur, comme signal de perspective, le signal de perspective de fondu étant utilisé par les moyens de combinaison pour produire un effet de fondu pour le signal vidéo transformé dans le signal vidéo de sortie ; et

des moyens (90-96) de génération d'un signal de perspective de priorité à partir du signal de profondeur, comme signal de perspective, le signal de perspective de priorité étant utilisé par les moyens de combinaison afin de produire un effet de plans en intersection pour le signal vidéo transformé dans le signal vidéo de sortie.

8. Système suivant la revendication 7, dans lequel les moyens de combinaison comprennent :

des moyens (70) de combinaison du signal vidéo transformé avec un signal vidéo noir comme deuxième signal, en fonction du signal de perspective d'assombrissement, afin de produire l'effet d'assombrissement ;

des moyens (80) de combinaison du signal de clé associé transformé avec un signal de clé zéro comme deuxième signal de clé, en fonction du signal de perspective de fondu, afin de produire l'effet de fondu ; et

des moyens (84) de combinaison du signal vidéo transformé et du signal de clé associé avec un deuxième signal vidéo d'entrée et un deuxième signal de clé associé comme deuxièmes signaux vidéo et de clé, en fonction du signal de perspective de priorité, afin de produire l'effet de plans en intersection.

9. Procédé de traitement d'un signal vidéo comprenant les étapes de transformation (16,18) d'un premier signal vidéo (VIDEO1) et d'un premier signal de clé associé (KEY1) en un signal vidéo transformé et un signal de clé associé, afin de produire un signal vidéo de sortie (FGRD VIDEO) et un signal de clé associé (FGRD KEY), caractérisé par les étapes de

génération d'un premier signal de profondeur (DEPTH1) associé au premier signal vidéo ;

obtention (60) d'un signal de perspective à partir du premier signal de profondeur ; et

combinaison (70,80,84) du signal vidéo transformé et du signal de clé associé avec un deuxième signal vidéo et un deuxième signal de clé, en fonction du signal de perspective, afin de produire le signal vidéo de sortie et le signal de clé associé.

10. Procédé suivant la revendication 9, dans lequel l'étape d'obtention comprend la génération (86) d'un signal de perspective de coupure à partir du signal de profondeur, comme signal de perspective, pour supprimer le signal vidéo transformé et le signal de clé associé lorsque le signal de profondeur indique que la scène représentée par le signal vidéo transformé est occultée par le plan de projection sur lequel le signal vidéo transformé est vu, afin de produire le signal vidéo de sortie et le signal de clé associé.

11. Procédé suivant la revendication 9, dans lequel l'étape d'obtention comprend la génération (62-68) d'un signal de perspective d'assombrissement à partir du signal de profondeur, comme signal de perspective, le signal de perspective d'assombrissement étant utilisé dans l'étape de combinaison (70) pour mélanger, comme deuxième signal vidéo, un signal vidéo noir avec le signal vidéo transformé, afin de produire le signal vidéo de sortie.

12. Procédé suivant la revendication 9, dans lequel l'étape d'obtention comprend la génération (72-78) d'un signal de perspective de fondu à partir du signal de profondeur, comme signal de perspective, le signal de perspective de fondu étant utilisé dans l'étape de combinaison (80) pour mélanger, comme deuxième signal de clé, un signal de clé zéro avec le signal de clé associé transformé, afin de produire le signal de clé associé de sortie.

13. Procédé suivant la revendication 9, dans lequel l'étape d'obtention comprend la génération (90-96) d'un signal de perspective de priorité à partir du signal de profondeur, comme signal de perspective, le signal de perspective de priorité étant utilisé dans l'étape de combinaison (84) pour mélanger, comme deuxième signal vidéo et deuxième signal de clé, un deuxième signal vidéo d'entrée et un signal de clé associé avec le signal vidéo transformé et le signal de clé associé, afin de produire le signal vidéo de sortie et le signal de clé associé.

**14.** Procédé suivant la revendication 9, dans lequel l'étape de combinaison comprend :

la combinaison (70) du signal vidéo transformé avec un signal vidéo noir (BLACK) comme deuxième signal vidéo, en fonction du signal de perspective, afin de produire un effet d'assombrissement dans le signal vidéo transformé ;

la combinaison (80) du signal de clé associé transformé avec un signal de clé zéro (0) comme deuxième signal de clé, en fonction du signal de perspective, afin de produire un effet de fondu dans le signal vidéo transformé ; et

la combinaison (84) du signal vidéo transformé et du signal de clé associé avec un deuxième signal vidéo d'entrée (VIDEO2) et un deuxième signal de clé associé (KEY2) comme deuxièmes signaux vidéo et de clé, en fonction du signal de perspective, afin de produire un effet d'intersection dans le signal vidéo transformé.

**15.** Procédé suivant la revendication 9, dans lequel l'étape comprend :

la génération (86) d'un signal de perspective de coupure à partir du signal de profondeur, comme signal de perspective, le signal de perspective de coupure étant utilisé pour supprimer le signal vidéo transformé et le signal de clé associé lorsque le signal de profondeur indique une position derrière un plan de projection pour le signal vidéo transformé et le signal de clé associé

la génération (62-68) d'un signal de perspective d'assombrissement à partir du signal de profondeur, comme signal de perspective, le signal de perspective d'assombrissement étant utilisé dans l'étape de combinaison (70) afin de produire un effet d'assombrissement pour le signal vidéo transformé dans le signal vidéo de sortie ;

la génération (70-76) d'un signal de perspective de fondu à partir du signal de profondeur, comme signal de perspective, le signal de perspective de fondu étant utilisé dans l'étape de combinaison (80) afin de produire un effet de fondu pour le signal vidéo transformé dans le signal vidéo de sortie ; et

la génération (90-96) d'un signal de perspective de priorité à partir du signal de profondeur, comme signal de perspective, le signal de perspective de priorité étant utilisé dans l'étape de combinaison (84) afin de produire un effet de plans en intersection pour le signal vidéo transformé dans le signal vidéo de sortie.

**16.** Procédé suivant la revendication 15, dans lequel l'étape de combinaison comprend :

la combinaison (70) du signal vidéo transformé avec un signal vidéo noir comme deuxième signal, en fonction du signal de perspective d'assombrissement, afin de produire l'effet d'assombrissement ;

la combinaison (80) du signal de clé associé transformé avec un signal de clé zéro, comme deuxième signal de clé, en fonction du signal de perspective de fondu, afin de produire l'effet de fondu ; et

la combinaison (84) du signal vidéo transformé et du signal de clé associé avec un deuxième signal vidéo d'entrée et un deuxième signal de clé associé comme deuxièmes signaux vidéo et de clé, en fonction du signal de perspective de priorité, afin de produire l'effet de plans en intersection.

FIG. 1a

FIG. 1b

FIG. 1c

FIG. 1d

FIG. 1e

FIG. 2

KEY

WRITE CLOCK 10

FORWARD ADDRS. GEN. 14 ( U,V )

READ CLOCK 17

READ ADDR. COUNTER 16 ( X,Y )

REVERSE ADDR. GEN. 18 (X',Y',)

I / F 19 T'

FGRD VIDEO

KEY FRAME BUFFER WRITE READ 26

WRITE READ VIDEO FRAME BUFFER 12

INTER-POLATOR 28

INTER-POLATOR 20

BLANKER 30

BLANKER 24

ADDR. LIMIT DETECTOR 22

BACKGROUND MIXER 32

VIDEO OUT

BGRD VIDEO

EP 0 264 964 B1

FIG. 3